# EUROPEAN PATENT APPLICATION

(11) **EP 4 044 678 A1**
(43) Date of publication of application: **17.08.2022**
(21) Application number: 20873576.1
(22) Date of filing: 29.09.2020
(51) Int. Cl.: H04W 36/16

(54) **METHOD, DEVICE AND SYSTEM FOR DWELLING IN CELL**

(30) Priority: 11.10.2019 CN 201910964936
(71) Applicant: Vivo Mobile Communication Co., Ltd., Dongguan, Guangdong 523863 (CN)
(72) Inventor: SUN, Yanliang, Dongguan, Guangdong 523863 (CN); HE, Yi, Dongguan, Guangdong 523863 (CN); WANG, Tianchuan, Dongguan, Guangdong 523863 (CN)
(74) Representative: Raffay & Fleck
(86) International application number: PCT/CN2020/118810
(87) International publication number: WO 2021/068801

(57) **Abstract**

Provided are a method, device and system for dwelling in a cell. The method comprises: when a ping-pong handover deadlock occurs between a first cell and a second cell, a UE dwelling in the first cell or the second cell according to first information, wherein after the UE dwells in the first cell or the second cell, the UE ends this ping-pong handover deadlock; and the first information is determined according to target measurement configuration information.

## Description

### TECHNICAL FIELD

Embodiments of the present application relate to the field of communication technologies, and in particular to a cell camping method, a device, and a system.

### BACKGROUND

In a communications system, a network device may deliver a measurement configuration to user equipment (user equipment, UE). Parameters in the measurement configuration may include parameters such as a measurement object (measurement object), a report configuration (report configuration), and a measurement identity (measurement identity).

When the UE is in a radio resource control (radio resource control, RRC) connected state, the UE may measure a neighboring cell according to the measurement configuration delivered by the network device. If a measurement result of the neighboring cell satisfies the report configuration (for example, satisfies a trigger condition that is configured by the network device for reporting a measurement report (measurement report, MR)), the UE may use the MR to report the measurement result of the neighboring cell measured by the UE to the network device. Therefore, the network device may deliver a handover instruction to the UE, to hand over the UE from a current cell to the neighboring cell.

However, report configurations of some cells delivered by the network device to the UE may be inappropriate. Therefore, for static UE, measurement results of a current cell and any one of neighboring cells of the UE may both satisfy a report configuration corresponding to the UE. As a result, the UE may be handed over back and forth between the two cells. That is, the UE encounters a ping-pong handover deadlock (deadlock). In this case, the UE may remain in a connected state for a long time, resulting in increased power consumption of the UE.

### SUMMARY

Embodiments of the present application provide a cell camping method, a device, and a system, to resolve the problem that existing UE encounters a ping-pong handover deadlock and the UE remains in a connected state for a long time, resulting in increased power consumption of the UE.

According to a first aspect, the embodiments of the present application provide a cell camping method. The method is applicable to UE. The method includes: in a case that the UE encounters a ping-pong handover deadlock between a first cell and a second cell, camping on the first cell or the second cell according to first information, where after the UE camps on the first cell or the second cell, the UE ends the ping-pong handover deadlock, and the first information is determined according to target measurement configuration information.

According to a second aspect, the embodiments of the present application provide a cell camping method. The method is applicable to a network device. The method includes: receiving target information sent by UE, the target information being used for instructing the network device to configure measurement configuration information corresponding to the target information for the UE, where the target information is first information or information determined according to the first information, and the first information is information for the UE to camp on a first cell or a second cell.

According to a third aspect, the embodiments of the present application provide UE. The UE includes a processing module. The processing module is configured to: in a case that the UE encounters a ping-pong handover deadlock between a first cell and a second cell, camp on the first cell or the second cell according to first information, where after the UE camps on the first cell or the second cell, the UE ends the ping-pong handover deadlock, and the first information is determined according to target measurement configuration information.

According to a fourth aspect, the embodiments of the present application provide a network device. The network device includes a receiving unit. The receiving unit is configured to receive target information sent by UE, the target information being used for instructing the network device to configure measurement configuration information corresponding to the target information for the UE, where the target information is first information or information determined according to the first information, and the first information is information for the UE to camp on a first cell or a second cell.

According to a fifth aspect, the embodiments of the present application provide UE, including a processor, a memory, and a computer program stored in the memory and capable of being run on the processor, where the computer program is executed by the processor to implement the steps of the foregoing cell camping method provided in the first aspect.

According to a sixth aspect, the embodiments of the present application provide a network device, including a processor, a memory, and a computer program stored in the memory and capable of being run on the processor, where the computer program is executed by the processor to implement the steps of the foregoing cell camping method provided in the second aspect.

According to a seventh aspect, the embodiments of the present application provide a communications system. The communications system includes the foregoing UE in the third aspect and the foregoing network device in the fourth aspect. Alternatively, the communications system includes the foregoing UE in the fifth aspect and the foregoing network device in the sixth aspect.

According to an eighth aspect, the embodiments of the present application provide a computer-readable storage medium, storing a computer program, where the computer program is executed by a processor to implement the steps of the foregoing cell camping method in the first aspect or second aspect.

In the embodiments of the present application, in a case that UE encounters a ping-pong handover deadlock between a first cell and a second cell, the UE may camp on the first cell or the second cell according to first information (determined according to target measurement configuration information), where after the UE camps on the first cell or the second cell, the UE ends the ping-pong handover deadlock. By means of the solution, in a case that the UE encounters a ping-pong handover deadlock between the first cell and the second cell, the UE may camp on the first cell or the second cell according to the first information. Therefore, the UE may be stopped from being handed over back and forth between the first cell and the second cell. That is, the UE may end the ping-pong handover deadlock. In this way, after the UE camps on the first cell or the second cell, the UE may be released from a connected state, that is, the UE may be switched from the connected state to an idle state, so that the power consumption of the UE can be reduced.

### BRIEF DESCRIPTION OF THE DRAWINGS

FIG. 1 is a schematic architectural diagram of a communications system according to an embodiment of the present application;
FIG. 2 is a schematic structural diagram of cells between which a ping-pong handover deadlock occurs according to an embodiment of the present application;
FIG. 3 is a schematic diagram 1 of a cell camping method according to an embodiment of the present application;
FIG. 4 is a schematic diagram 2 of a cell camping method according to an embodiment of the present application;
FIG. 5 is a schematic diagram 3 of a cell camping method according to an embodiment of the present application;
FIG. 6 is a schematic diagram 4 of a cell camping method according to an embodiment of the present application;
FIG. 7 is a schematic diagram 5 of a cell camping method according to an embodiment of the present application;
FIG. 8 is a schematic diagram 6 of a cell camping method according to an embodiment of the present application;
FIG. 9 is a schematic diagram 7 of a cell camping method according to an embodiment of the present application;
FIG. 10 is a schematic diagram 8 of a cell camping method according to an embodiment of the present application;
FIG. 11 is a schematic structural diagram 1 of UE according to an embodiment of the present application;
FIG. 12 is a schematic structural diagram 2 of UE according to an embodiment of the present application;
FIG. 13 is a schematic structural diagram 3 of UE according to an embodiment of the present application;
FIG. 14 is a schematic structural diagram 4 of UE according to an embodiment of the present application;
FIG. 15 is a schematic structural diagram of a network device according to an embodiment of the present application;
FIG. 16 is a schematic hardware diagram of UE according to an embodiment of the present application; and
FIG. 17 is a schematic hardware diagram of a network device according to an embodiment of the present application.

### DETAILED DESCRIPTION

The technical solutions in embodiments of the present application are clearly and completely described in the following with reference to the accompanying drawings in the embodiments of the present application. Apparently, the described embodiments are some rather than all of the embodiments of the present application. All other embodiments obtained by a person of ordinary skill in the art based on the embodiments of the present application without creative efforts shall fall within the protection scope of the present application.

The term "and/or" in this specification describes an association relationship for describing associated objects and represents that three relationships may exist. For example, A and/or B may represent the following three cases: Only A exists, both A and B exist, and only B exists. The symbol "/" herein represents that associated objects have an "or" relationship. For example, "A/B" represents "A or B".

In the specification and claims of the present application, the terms "first", "second", and the like are intended to distinguish between different objects but do not indicate a particular order of the objects. For example, first information, second information, and the like are used for distinguishing between different information rather than describing a specific order of the information.

In addition, in the embodiments of the present application, the word "exemplary" or "for example" is used to represent giving an example, an illustration, or a description. Any embodiment or design scheme described as an "exemplary" or "for example" in the embodiments of the present application should not be explained as being more preferred or having more advantages than another embodiment or design scheme. Exactly, use of the word "example" or "for example" or the like is intended to present a related concept in a specific manner.

In the description of the embodiments of the present application, "plurality" means two or more unless otherwise described. For example, "a plurality of elements" means two or more elements.

The embodiments of the present application provide a cell camping method, a device, and a system. In a case that UE encounters a ping-pong handover deadlock between a first cell and a second cell, the UE may camp on the first cell or the second cell according to first information (determined according to target measurement configuration information), where after the UE camps on the first cell or the second cell, the UE ends the ping-pong handover deadlock. By means of the solution, in a case that the UE encounters a ping-pong handover deadlock between the first cell and the second cell, the UE may camp on the first cell or the second cell according to the first information. Therefore, the UE may be stopped from being handed over back and forth between the first cell and the second cell. That is, the UE may end the ping-pong handover deadlock. In this way, after the UE camps on the first cell or the second cell, the UE may be released from a connected state, that is, the UE may be switched from the connected state to an idle state, so that the power consumption of the UE can be reduced.

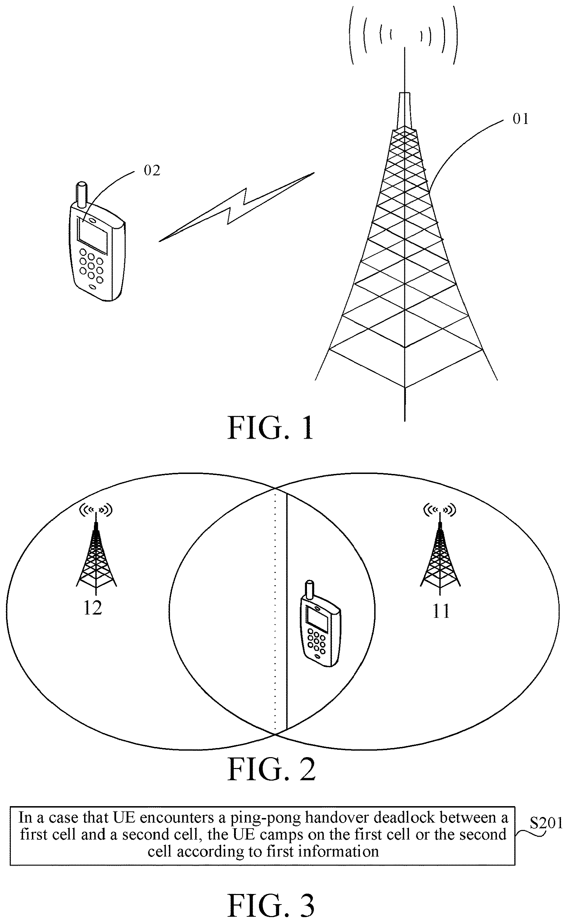

The cell camping method provided in the embodiments of the present application is applicable to a communications system. The communications system may be a wireless communications system. The wireless communications system may include a network device and UE. FIG. 1 is a schematic architectural diagram of a wireless communications system according to an embodiment of the present application. In FIG. 1, the wireless communications system may include a network device 01 and UE 02. A connection may be established between the network device 01 and the UE 02. It may be understood that a wireless connection may be established between the network device 01 and the UE 02.

Optionally, in the embodiments of the present application, the UE is a device that provides voice and/or data connectivity to a user, a handheld device with a wired/wireless connection function or another processing device connected to a wireless modem. The UE may communicate with one or more core network devices through a radio access network (Radio Access Network, RAN). The UE may be a mobile terminal, for example, a mobile phone (or referred to as a "cellular" phone) and a computer with a mobile terminal, or may be a portable, pocket-sized, handheld, computer built-in, or in-vehicle mobile device, which exchanges voice and/or data with the RAN, for example, a device such as a personal communication service (personal communication service, PCS) phone, a cordless phone, a Session Initiation Protocol (SIP) phone, a wireless local loop (wireless local loop, WLL) station, and a personal digital assistant (personal digital assistant, PDA). The UE may also be referred to as a user agent (user agent), UE, or the like.

In the embodiments of the present application, the network device is a device that is deployed in the RAN and is configured to provide a wireless communication function to the UE. In the embodiments of the present application, the network device may be a base station, and the base station may include a macro base station, a micro base station, a relay station, an access point, and the like in various forms. In systems using different radio access technologies, names of devices having base station functions may be different. For example, in a 5G system, the device may be referred to as a 5G base station (gNB); in a 4^{th} generation wireless communication (4-Generation, 4G) system, for example, in a long term evolution (long term evolution, LTE) system, the device may be referred to as an evolved Node B (evolved Node B, eNB); and in a 3^{rd} generation mobile communication (3G) system, the device may be referred to as a Node B (Node B). With the evolution of communications technologies, the name "base station" may change.

In an LTE field, when a quantity of inter-frequency frequencies increases, if a measurement report event (which may also be referred to as a measurement and report event) of a report configuration in a measurement configuration delivered by a network device to UE is a specific measurement report event (for example, Event A3, Event A4 or Event A5), the UE may encounter a ping-pong handover deadlock.

Measurement report trigger conditions may be different for different measurement report events. A measurement report trigger condition corresponding to Event A3, a measurement report trigger condition corresponding to Event A4, and a measurement report trigger condition corresponding to Event A5 are separately exemplarily described below.

The measurement report trigger condition corresponding to Event A3 may be: Mn + Ofn + Ocn - Hys > Ms + Ofs + Ocs + Off.

The measurement report trigger condition corresponding to Event A4 may be: Mn + Ofn + Ocn - Hys > Thresh.

The measurement report trigger condition corresponding to Event A5 may be: Ms + Hys < Thresh1, and Mn + Ofn + Ocn - Hys > Thresh2. That is, Ms + Hys < Thresh1&&Mn + Ofn + Ocn - Hys > Thresh2.

Ms is used for representing a measurement result of a serving cell, Mn is used for representing a measurement result of a neighboring cell, Ofn is used for representing a frequency-specific offset of the neighboring cell, Ocn is used for representing a cell-specific offset of the neighboring cell, Ofs is used for representing a frequency-specific offset of the serving cell, Ocs is used for representing a cell-specific offset of the serving cell, Off is used for representing a threshold corresponding to Event A3 configured by the network device for the UE, Thresh is used for representing a threshold corresponding to Event A4 configured by the network device for the UE, Thresh1 and Thresh2 are both used for representing thresholds corresponding to Event A5 configured by the network device for the UE, and Hys is used for representing hysteresis.

It should be noted that Event A3 is mainly used for a handover of the UE between cells at frequencies with the same priority. Event A4 is mainly used for a handover of the UE from a cell at a frequency with a low priority to cell at a frequency with a high priority. Event A5 is mainly used for a handover of the UE from a cell at a frequency with a high priority to cell at a frequency with a low priority.

A priority of a frequency corresponding to a connected state is an implicit implementation inside a network device (for example, a base station), and does not need to be broadcast in a manner such as signaling.

During actual implementation, settings of a priority of a frequency may not exist in a network device. In this case, the network device may modify a measurement event of a handover of the UE from a serving cell to a neighboring cell based on a built-in algorithm; or a network optimization engineer uses a control interface to modify a measurement event of a handover of the UE from a serving cell to a neighboring cell.

A case in which the UE encounters a ping-pong handover deadlock is exemplarily described below with reference to FIG. 2.

For example, it is assumed that as shown in FIG. 2, for a cell C1 11 at a frequency C, a reference signal received power (reference signal received power, RSRP) measured by the UE is approximately -90 decibel milliwatts (dBm), and for a cell B1 12 at a frequency B, an RSRP measured by the UE is approximately -100 dBm. For the cell C1 11, a measurement report event of the frequency B configured by the network device for the UE is Event A4. Event A4 corresponds to a threshold of -105 dBm, a hysteresis of 2 dBm, and both a frequency-specific offset and a cell-specific offset of 0. For the cell B1 12, a measurement report event of the frequency C configured by the network device for the UE is Event A3. Event A3 corresponds to a threshold of 2 dBm and a hysteresis of 2 dBm. In this case, based on the configuration, when a serving cell of the UE is the cell B1, the UE reports Event A3 to the network device, to hand over the UE to the cell C1, and when the serving cell of the UE is the cell C1, the UE reports Event A4 to the network device, to hand over the UE to the cell B1. This process is repeated to form a ping-pong handover deadlock.

However, a condition for releasing the UE from a connected state (which may be specifically an RRC connected state) may be: based on that an inactive timer of the network device (for example, a base station corresponding to the serving cell of the UE) expires, the network device may deliver a release instruction to the UE. Therefore, when the UE encounters a ping-pong handover deadlock between two cells, the inactive timer of the network device cannot expire. In this case, the network device does not deliver the release instruction to the UE, and as a result the UE cannot be released from a connected state, leading to increased power consumption of the UE.

In the embodiments of the present application, when the UE encounters a ping-pong handover deadlock between two cells, the UE may camp on one of the two cells according to information determined according to measurement configuration information configured by the network device. In this way, the UE can end the ping-pong handover deadlock, and the UE can be released from a connected state, so that the power consumption of the UE can be reduced.

The cell camping method provided in the embodiments of the present application is exemplarily described below with reference to the accompanying drawings

As shown in FIG. 3, the embodiments of the present application provide a cell camping method. The method is applicable to the wireless communications system shown in FIG. 1. The method may include the following S201.

S201: In a case that UE encounters a ping-pong handover deadlock between a first cell and a second cell, the UE camps on the first cell or the second cell according to first information.

After the UE camps on the foregoing first cell or second cell, the UE may end the ping-pong handover deadlock. The foregoing first information may be determined according to target measurement configuration information. The target measurement configuration information may be configured by a network device.

In the embodiments of the present application, in a case that the UE encounters a ping-pong handover deadlock between the foregoing first cell and second cell, the UE may camp on the first cell or the second cell according to the first information determined by the foregoing target measurement configuration information. In this way, the UE can end the ping-pong handover deadlock, and after the UE camps on the first cell or the second cell, the UE can be released from a connected state, so that the power consumption of the UE can be reduced.

Optionally, in the embodiments of the present application, the foregoing first cell and second cell are cells at the same frequency or may be cells at inter-frequency frequencies. This may be specifically determined according to an actual use requirement, and is not limited in the embodiments of the present application.

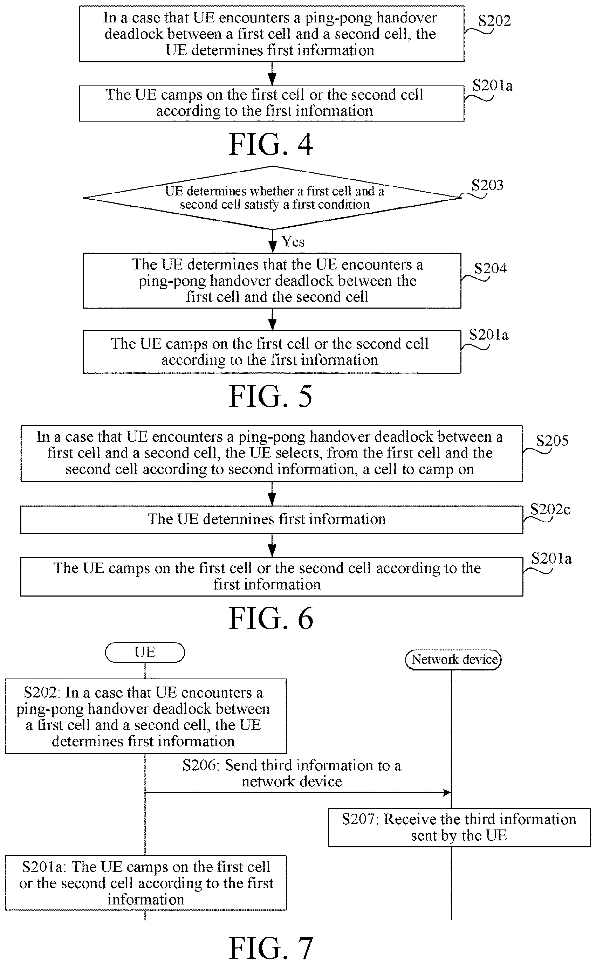

Optionally, in the embodiments of the present application, with reference to FIG. 3 above, as shown in FIG. 4, before the foregoing S201, the cell camping method provided in the embodiments of the present application may further include the following S202. The foregoing S201 may be specifically implemented by using the following S201a.

S202: In a case that UE encounters a ping-pong handover deadlock between a first cell and a second cell, the UE determines first information.

S201a: The UE camps on the first cell or the second cell according to the first information.

In the embodiments of the present application, in a case that the UE encounters a ping-pong handover deadlock between the first cell and the second cell, the UE may first determine the foregoing first information and then camp on the first cell or the second cell according to the first information.

It may be understood that in the embodiments of the present application, according to the first information, for the first cell and the second cell, the UE may be changed from simultaneously satisfying a measurement report trigger condition corresponding to the first cell and a measurement report trigger condition corresponding to the second cell. In this way, the UE may no longer encounter a ping-pong handover deadlock between the first cell and the second cell, so that the UE may camp on one of the first cell and the second cell.

Optionally, in the embodiments of the present application, the foregoing S202 may be specifically implemented by using the following S202a.

S202a: In a case that the UE encounters a ping-pong handover deadlock between the first cell and the second cell, determine, based on a measurement report trigger condition, the first information that does not cause the UE to encounter a ping-pong handover deadlock between the first cell and the second cell.

Optionally, in the embodiments of the present application, the foregoing S202a may be replaced with the following S202b.

S202b: In a case that the UE encounters a ping-pong handover deadlock between the first cell and the second cell, determine the first information based on a measurement report trigger condition and a condition that does not cause the UE to encounter a ping-pong handover deadlock between the first cell and the second cell.

In the embodiments of the present application, the foregoing condition that does not cause the UE to encounter a ping-pong handover deadlock between the first cell and the second cell may be a condition assumed in a process in which the UE determines the first information. Specifically, in a case that the UE encounters a ping-pong handover deadlock between the first cell and the second cell, the UE may determine, based on the measurement report trigger condition when it is assumed that the UE does not encounter a ping-pong handover deadlock between the first cell and the second cell, a parameter that does not satisfy the measurement report trigger condition, determine the foregoing first information according to the parameter, and then can relatively stably camp on the first cell or the second cell according to the first information.

It may be understood that after the UE camps on the first cell or the second cell, in a case that the UE applies the foregoing first information, MR reporting of the UE is no longer triggered. That is, the UE can stably camp on the first cell or the second cell.

Optionally, in the embodiments of the present application, the foregoing parameter that is determined by the UE and does not satisfy the measurement report trigger condition may include at least one parameter or parameter combination. The first information may be any one of the at least one parameter or parameter combination.

Optionally, in the embodiments of the present application, the measurement report trigger condition in the foregoing step S202a may include at least one of the measurement report trigger condition corresponding to the first cell and the measurement report trigger condition corresponding to the second cell.

In the embodiments of the present application, the foregoing first information is determined by the UE based on the measurement report trigger condition and the condition that does not cause the UE to encounter a ping-pong handover deadlock between the first cell and the second cell. Therefore, after the UE camps on the first cell or the second cell according to the first information, for the first cell or the second cell, the UE no longer satisfies the measurement report trigger condition corresponding to the first cell or the second cell, that is, the UE no longer performs MR reporting, and the UE can end the ping-pong handover deadlock, so that the UE can stably camp on the first cell or the second cell.

Optionally, in the embodiments of the present application, the foregoing first information is only effective for the first cell and/or the second cell. That is, the first information is bound with a cell (which may be specifically bound with a cell global identity (cell global identity, CGI) of the cell). Therefore, based on another handover event, for example, a handover of the UE from a cell (that is, the foregoing first cell or second cell) on which the UE currently camps to a third cell, after the UE enters the third cell, the first information becomes ineffective.

In the embodiments of the present application, the foregoing first information may be information related to the measurement configuration information. The first information may be specifically information related to the measurement report trigger condition in the measurement configuration information.

Optionally, in the embodiments of the present application, the foregoing measurement report trigger condition may include at least one parameter in a measurement report event, a cell-specific offset, a frequency-specific offset, a measurement report threshold (referred to as the measurement report threshold for short below) corresponding to the measurement report event. This may be specifically determined according to an actual use requirement, and is not limited in the embodiments of the present application.

Optionally, in the embodiments of the present application, the foregoing first information may include at least one of the following: a cell-specific offset, a frequency-specific offset, a target measurement report event, and a target measurement report threshold.

Certainly, during actual implementation, the foregoing first information may further include any other possible parameter. This may be specifically determined according to an actual use requirement, and is not limited in the embodiments of the present application.

Optionally, in the embodiments of the present application, the foregoing target measurement configuration information may include at least one of the following: first measurement configuration information corresponding to the first cell (referred to as first measurement configuration information for short below) and second measurement configuration information corresponding to the second cell (referred to as second measurement configuration information for short below).

That is, the foregoing first information may be determined according to the first measurement configuration information. The foregoing first information may be alternatively determined according to the second measurement configuration information. The foregoing first information may be alternatively determined according to the first measurement configuration information and the second measurement configuration information. This may be specifically determined according to an actual use requirement, and is not limited in the embodiments of the present application.

It should be noted that in the embodiments of the present application, the foregoing first measurement configuration information corresponding to the first cell may include parameters such as a measurement report event corresponding to the first cell, a cell-specific offset corresponding to the first cell, a frequency-specific offset corresponding to the first cell, and a measurement report threshold corresponding to the first cell; and the second measurement configuration information corresponding to the second cell may include a measurement report event corresponding to the second cell, a cell-specific offset corresponding to the second cell, a frequency-specific offset corresponding to the second cell, and a measurement report threshold corresponding to the second cell.

Optionally, in the embodiments of the present application, if the first information is different, the foregoing target measurement configuration information is different. That is, if the first information is different, when the UE determines the first information, the used measurement configuration information and parameters in the measurement configuration information may be different.

the foregoing first information, the measurement configuration information used for determining the first information, and parameters in the measurement configuration information may be separately described below by using different implementations.

First implementation: The first information includes at least one of the cell-specific offset and the frequency-specific offset. The first information may be determined according to at least one of a specific offset in the foregoing first measurement configuration information and a specific offset in the foregoing second measurement configuration information.

Optionally, in the embodiments of the present application, when the first information includes a cell-specific offset, the first information may be determined according to at least one of a cell-specific offset in the first measurement configuration information and a cell-specific offset in the second measurement configuration information; and when the first information includes a frequency-specific offset, the first information may be determined according to at least one of a frequency-specific offset in the first measurement configuration information and a frequency-specific offset in the second measurement configuration information. This may be specifically determined according to an actual use requirement, and is not limited in the embodiments of the present application.

Optionally, for the first implementation, when the UE determines that the UE encounters a ping-pong handover deadlock between the first cell and the second cell, the UE may collect statistics of measured values of inter-frequency cells in a plurality of most recent times, calculate an adjustment value according to these measured values, and determine a specific offset value (including at least one of a cell-specific offset and a frequency-specific offset) based on the adjustment value, that is, determine the foregoing first information.

Optionally, for the first implementation, the foregoing adjustment value may be configured in an MR corresponding to the opposite cell of any cell in ping-pong cells (the first cell and the second cell). That is, the foregoing adjustment value may be configured in an MR of the second cell corresponding to the first cell or may be configured in an MR of the first cell corresponding to the second cell.

Optionally, for the first implementation, if cells on which the UE camps are different, cell-specific offsets and/or frequency-specific offsets included in the first information may be different.

For example, with reference to the foregoing example corresponding to FIG. 2, it is assumed that the UE camps on the cell B1. When the UE is in the cell B1, that is, a current serving cell of the UE is the cell B1, a measured value (that is, Mn) of an RSRP of the cell C1 is -90 dBm, and a measured value (that is, Ms) of an RSRP of the cell B1 is -100 dBm. For the cell B1, a measurement report event configured by the network device is Event A3, and a threshold (that is, Off) corresponding to Event A3 is 2 dBm. In a case that the UE makes the hysteresis zero (that is, Hys = 0), according to the measurement report trigger condition corresponding to Event A3: Mn + Ofn + Ocn - Hys > Ms + Ofs + Ocs + Off, the UE may determine that it is necessary to configure that a frequency-specific offset (that is, Ofs) of the serving cell (that is, the cell B1) is 8 dBm, or configure that a cell-specific offset (that is, Ocs) of the serving cell is 8 dBm, or configure that a frequency-specific offset (that is, Ofn) of the neighboring cell (that is, the cell C1) is -8 dBm, or configure that a cell-specific offset (that is, Ocn) of the neighboring cell is -8 dBm. In this case, after applying these configurations, the UE may make the UE camp on the cell B1. After these configurations are applied, a measurement report corresponding to Event A3 is no longer triggered, so that the UE can end the ping-pong handover deadlock.

In another example, with reference to the foregoing example corresponding to FIG. 2, it is assumed that the UE camps on the cell C1. When the UE is in the cell C1, that is, a current serving cell of the UE is the cell C1, a measured value (that is, Mn) of an RSRP of the cell B1 is -100 dBm. For the cell C1, a measurement report event configured by the network device is Event A4, and a threshold (that is, Thresh) corresponding to Event A4 is -105 dBm. In a case that the UE makes the hysteresis zero (that is, Hys = 0), according to the measurement report trigger condition corresponding to Event A4: Mn + Ofn + Ocn - Hys > Thresh, the UE may determine that it is necessary to configure that a frequency-specific offset (that is, Ofn) of the neighboring cell (that is, the cell B1) is -5 dBm, or configure that a cell-specific offset (that is, Ocn) of the neighboring cell is -5 dBm. In this case, after applying these configurations, the UE may make the UE camp on the cell C1. After these configurations are applied, a measurement report corresponding to Event A4 is no longer triggered, so that the UE can end the ping-pong handover deadlock.

Second implementation: The first information includes at least one of the cell-specific offset and the frequency-specific offset. The first information may be determined according to a measurement report event in the first measurement configuration information, a measurement report event in the second measurement configuration information, a specific offset in the first measurement configuration information, and a specific offset in the second measurement configuration information.

Optionally, in the embodiments of the present application, when the first information includes the cell-specific offset, the first information may be determined according to a measurement report event in the first measurement configuration information, a measurement report event in the second measurement configuration information, a cell-specific offset in the first measurement configuration information, and a cell-specific offset in the second measurement configuration information. When the first information includes the frequency-specific offset, the first information may be determined according to the measurement report event in the first measurement configuration information, the measurement report event in the second measurement configuration information, a frequency-specific offset in the first measurement configuration information, and a frequency-specific offset in the second measurement configuration information. This may be specifically determined according to an actual use requirement, and is not limited in the embodiments of the present application.

Optionally, for the second implementation, when the measurement report event corresponding to the first cell and the measurement report event corresponding to the second cell are measurement report events of the same type, the UE may encounter a ping-pong handover deadlock between the first cell and the second cell due to at least one of the cell-specific offset corresponding to the first cell, the cell-specific offset corresponding to the second cell, the frequency-specific offset corresponding to the first cell, and the frequency-specific offset corresponding to the second cell. In this case, the UE may determine appropriate measurement configuration information based on a measurement report trigger condition of no longer causing a ping-pong handover deadlock.

Optionally, for the second implementation, when the measurement report event corresponding to the first cell and the measurement report event corresponding to the second cell are measurement report events of the same type, the UE may no longer apply at least one of the cell-specific offset corresponding to the first cell, the frequency-specific offset corresponding to the first cell, the cell-specific offset corresponding to the second cell, and the frequency-specific offset corresponding to the second cell.

For example, it is assumed that a measurement report event of a handover from the cell B1 to the cell C1 configured by the network device is Event A3, and a threshold corresponding to Event A3 is 2 dBm; a measurement report event of a handover from the cell C1 to the cell B1 configured by the network device is also Event A3, and a threshold corresponding to Event A3 is 2 dBm; and there is an offset (that is, a frequency-specific offset corresponding to the cell B1 is 10 dBm) of 10 dBm at a frequency B corresponding to the cell B1, or there is an offset (that is, a cell-specific offset corresponding to the cell B 1 is 10 dBm) of 10 dBm at the cell B 1. In this case, based on such a configuration, the UE may encounter a ping-pong handover deadlock between the cell B1 and the cell C1. In this case, after it is determined that the UE encounters a ping-pong handover deadlock between the cell B1 and the cell C1, the UE may no longer apply the frequency-specific offset corresponding to the cell B1 and the cell-specific offset corresponding to the cell B 1 configured by the network device, and the UE may camp on the cell B1 or the cell C1, so that the UE can end the ping-pong handover deadlock.

Third implementation: The first information includes the target measurement report event. The first information may be determined according to a measurement report event in the first measurement configuration information and a measurement report event in the second measurement configuration information.

Optionally, in the embodiments of the present application, when the measurement report event corresponding to the first cell and/or the measurement report event corresponding to the second cell is inappropriate, the UE may encounter a ping-pong handover deadlock between the first cell and the second cell. Therefore, for the third implementation, for either cell in the first cell and the second cell, before the UE determines whether the measurement report trigger condition corresponding to the measurement report event corresponding to the cell is satisfied, the UE may first determine whether the UE in the cell satisfies the measurement report trigger condition corresponding to the measurement report event corresponding to the other cell.

That is, measurement report is triggered only when the UE in one cell simultaneously satisfies measurement report trigger conditions corresponding to two measurement report events.

Optionally, for the third implementation, if the measurement report event corresponding to the first cell and the measurement report event corresponding to the second cell are Event A3+Event A4 or Event A3+Event A5, for a cell (the first cell or the second cell, referred to as a first target cell below) configured with a measurement report event being Event A4 or Event A5, before the UE triggers reporting of Event A4 or Event A5, the UE may first use the measurement report trigger condition corresponding to Event A3 corresponding to the other cell to determine whether the first target cell satisfies the measurement report trigger condition corresponding to Event A3.

For example, with reference to the foregoing example corresponding to FIG. 2, when the UE is in the cell C1, that is, a current serving cell of the UE is the cell C1, a measured value of an RSRP of the cell B1 is -100 dBm, and a measured value of an RSRP of the cell C1 is -90 dBm. For the cell B1, a measurement report event configured by the network device is Event A3, and a threshold corresponding to Event A3 is 2 dBm. For the cell C1, a measurement report event configured by the network device is Event A4. In this case, before the UE determines whether the cell B1 satisfies the measurement report trigger condition corresponding to Event A4, the UE may perform predetermination according to the measurement report trigger condition corresponding to Event A3 corresponding to the cell B 1 (that is, the measurement report event corresponding to the cell C1 may be Event A3+Event A4). The UE triggers determination of Event A4 of a handover from the cell C1 to the cell B1 configured by a network only when the cell B1 satisfies the measurement report trigger condition (that is, a result of the predetermination is success) of Event A3, to further trigger the handover from the cell C1 to the cell B1.

For the foregoing example, according to the measurement report trigger condition corresponding to Event A3, the cell B1 can meet the measurement report trigger condition of Event A3 only in a case that a measured value of the cell B1 is greater than a measured value of the cell C1 by over 2 dBm.

In addition, for the foregoing example, the UE can camp on a cell with a configured measurement report event being Event A4 or Event A5.

It should be noted that the foregoing third implementation is exemplarily described by using an example in which the first information is the target measurement report event. This does not constitute any limitation to the embodiments of the present application. During actual implementation, for the third implementation, the first information may further include any other possible parameter. This may be specifically determined according to an actual use requirement, and is not limited in the embodiments of the present application.

Fourth implementation: The first information includes the target measurement report threshold. The first information may be determined according to a measurement report event in the first measurement configuration information, a measurement report event in the second measurement configuration information, a measurement report threshold in the first measurement configuration information, and a measurement report threshold in the second measurement configuration information.

Optionally, in the embodiments of the present application, when the measurement report threshold corresponding to the first cell and/or the measurement report threshold corresponding to the second cell is inappropriate, the UE may encounter a ping-pong handover deadlock between the first cell and the second cell. Therefore, for the fourth implementation, for one cell in the first cell and the second cell, the UE may apply the measurement report threshold corresponding to the other cell.

Optionally, in the embodiments of the present application, if the measurement report event corresponding to the first cell and the measurement report event corresponding to the second cell are Event A4+Event A5 and the measurement report threshold (Thresh) corresponding to Event A4 is lower than the measurement report threshold (that is, Thresh1) corresponding to Event A5, the UE may encounter a ping-pong handover deadlock between the first cell and the second cell. In this case, for the fourth implementation, the UE may directly apply the measurement report threshold of Event A4 to the measurement report threshold configuration corresponding to Event A5. That is, the UE may use Thresh corresponding to Event A4 as Thresh1 corresponding to Event A5.

It should be noted that the foregoing third implementation is exemplarily described by using an example in which the first information is a target measurement report threshold. This does not constitute any limitation to the embodiments of the present application. During actual implementation, for the foregoing fourth implementation, the first information may further include any other possible parameter. This may be specifically determined according to an actual use requirement, and is not limited in the embodiments of the present application.

In addition, in the embodiments of the present application, only the foregoing four implementations (that is, the foregoing first implementation, second implementation, third implementation, and fourth implementation) are used as examples to describe the foregoing first information, the measurement configuration information used for determining the first information, and parameters in the measurement configuration information. This does not constitute any limitation to the present application. During actual implementation, the foregoing first information, the measurement configuration information used for determining the first information, and parameters in the measurement configuration information may further include any other possible implementation. This may be specifically determined according to an actual use requirement, and is not limited in the embodiments of the present application.

In the embodiments of the present application, the measurement configuration information corresponding to the first cell is different from the measurement configuration information corresponding to the second cell, and as a result reasons for which the UE encounters a ping-pong handover deadlock between the first cell and the second cell may be different. Therefore, the UE may accurately determine, according to at least one (that is, the foregoing target measurement configuration information) of the first measurement configuration information corresponding to the first cell and the second measurement configuration information corresponding to the second cell, the first information that can cause the UE to end the ping-pong handover deadlock, so that a probability that the UE ends a ping-pong handover deadlock can be improved.

Optionally, in the embodiments of the present application, the UE may first determine whether the UE encounters a ping-pong handover deadlock between the first cell and the second cell. If the UE determines that the UE encounters a ping-pong handover deadlock between the first cell and the second cell, the UE may perform the steps of the cell camping method provided in the embodiments of the present application.

Correspondingly, if the UE determines that the UE does not encounter a ping-pong handover deadlock between the first cell and the second cell, the UE may continue to perform other steps.

For example, with reference to FIG. 3 above, as shown in FIG. 5, before the foregoing S201, the cell camping method provided in the embodiments of the present application may further include the following S203 and S204. The foregoing S201 may be specifically implemented by using the following S201a.

S203: UE determines whether a first cell and a second cell satisfy a first condition.

The first condition may include at least one of the following: a quantity of ping-pong handovers within a first time window reaches a first threshold; and a quantity of ping-pong handovers within a second time window reaches the first threshold and both a signal quality fluctuation value of the first cell and a signal quality fluctuation value of the second cell within the second time window are less than or equal to a second threshold.

S204: The UE determines that the UE encounters a ping-pong handover deadlock between the first cell and the second cell.

S201a: The UE camps on the first cell or the second cell according to the first information.

In the embodiments of the present application, the UE may determine whether a quantity of ping-pong handovers of the UE between the first cell and the second cell exceeds the foregoing first threshold within the first time window. If the UE determines that the quantity of ping-pong handovers of the UE between the first cell and the second cell exceeds the first threshold within the first time window, the UE may determine that the UE encounters a ping-pong handover deadlock between the first cell and the second cell. If the UE determines that the quantity of ping-pong handovers of the UE between the first cell and the second cell does not exceed the first threshold within the first time window, the UE may determine that the UE does not encounter a ping-pong handover deadlock between the first cell and the second cell. Alternatively, the UE may determine whether a quantity of ping-pong handovers of the UE between the first cell and the second cell exceeds the first threshold within the second time window and whether both the signal quality fluctuation value of the first cell and the signal quality fluctuation value of the second cell within the second time window are less than or equal to the second threshold. If the quantity of ping-pong handovers of the UE between the first cell and the second cell exceeds the first threshold within the second time window and both the signal quality fluctuation value of the first cell and the signal quality fluctuation value of the second cell within the second time window are less than or equal to the second threshold, the UE may determine that the UE encounters a ping-pong handover deadlock between the first cell and the second cell. If the quantity of ping-pong handovers of the UE between the first cell and the second cell does not exceed the first threshold within the second time window and/or the signal quality fluctuation value of the second target cell (at least one cell in the first cell and the second cell) within the second time window is greater than the second threshold, the UE may determine that the UE does not encounter a ping-pong handover deadlock between the first cell and the second cell.

It should be noted that in the embodiments of the present application, the quantity of ping-pong handovers may be used for indicating a quantity of back-and-forth handovers of the UE between two cells (for example, the foregoing first cell and second cell).

For example, between the cell Bland the cell C1, a handover from the cell B1 to the cell C1 and a handover from the cell C1 back to the cell B1 may be one ping-pong handover.

That is, when the quantity of ping-pong handovers of the UE between the cell B1 and the cell C1 reaches the first threshold (denoted as N), the UE consecutively encounters 2N handovers between the cell Bland the cell C1.

In the embodiments of the present application, a signal quality fluctuation value of a cell may be related to measured signal quality (for example, an RSRP and/or RSRQ) of the UE.

Optionally, the signal quality fluctuation value of the cell may be any possible value such as a difference between a maximum value of the RSRP of the cell and a minimum value of the RSRP of the cell, a difference between the maximum value of the RSRP of the cell and an average value of RSRPs of the cell, or a difference between the minimum value of the RSRP of the cell and the average value of the RSRPs of the cell. This may be specifically determined according to an actual use requirement, and is not limited in the embodiments of the present application.

For example, the signal quality fluctuation value of the first cell may be a difference between a maximum value of an RSRP of the first cell and an average value of RSRPs of the first cell. The signal quality fluctuation value of the second cell may be a difference between a maximum value of an RSRP of the second cell and an average value of RSRPs of the second cell.

Optionally, in the embodiments of the present application, the foregoing first threshold and second threshold may be values preset in the UE by a manufacturer of the UE. This may be specifically determined according to an actual use requirement, and is not limited in the embodiments of the present application.

Optionally, in the embodiments of the present application, the first time window may be a time window formed by a start time that is determined by the UE based on a first trigger condition and a time length that is determined by the UE based on a first preset duration. Correspondingly, the foregoing second time window may also be a time window formed by a start time that is determined by the UE based on a first trigger condition and a time length that is determined by the UE based on a second preset duration.

The foregoing first trigger condition may be a time at which the UE is handed over to a neighboring cell for the first time. The foregoing first preset duration and second preset duration may be a duration stored in an internal register of the UE.

Optionally, in the embodiments of the present application, the foregoing first preset duration and second preset duration may be the same or may be different. This may be specifically determined according to an actual use requirement, and is not limited in the embodiments of the present application.

Optionally, in the embodiments of the present application, before the UE camps on the first cell or the second cell according to the first information, the UE may first select, from the foregoing first cell and second cell, a cell (that is, a cell to camp on in the embodiments of the present application) that meets an actual use requirement of the UE. In this way, the UE may determine the foregoing first information according to the cell, and the UE may camp on, according to the first information, a cell that satisfies an actual use requirement of the UE, thereby improving the cell camping capability of the UE.

For example, with reference to FIG. 4 above, as shown in FIG. 6, before the foregoing S202, the cell camping method provided in the embodiments of the present application may further include the following S205. The foregoing S202 may be implemented by using the following S202c.

S205: In a case that UE encounters a ping-pong handover deadlock between a first cell and a second cell, the UE selects, from the first cell and the second cell according to second information, a cell to camp on.

The foregoing second information may include at least one of the following: a service requirement of the UE, signal quality of the foregoing first cell, and signal quality of the foregoing second cell.

It may be understood that the foregoing cell to camp on may be the first cell or the second cell.

S202c: The UE determines the first information.

In the embodiments of the present application, in a case that the UE encounters a ping-pong handover deadlock between the first cell and the second cell, the UE may first select, according to the foregoing second information, a cell to camp on, and then the UE determines appropriate first information, so that the UE can camp on the cell (that is, the foregoing first cell or second cell).

Optionally, in the embodiments of the present application, when the UE has a relatively low service requirement, the UE may select a cell with a relatively low physical uplink shared channel (physical uplink shared channel, PUSCH)/physical uplink control channel (physical uplink control channel, PUCCH) power control stabilization power value of the network device (for example, a base station) as the foregoing cell to camp on.

Optionally, in the embodiments of the present application, when the UE has a relatively high service requirement, for example, when the UE needs to send data or when the UE needs to ensure received quality of a downlink signal, the UE may select a cell with a relatively high RSRP and/or a cell with a relatively high RSRQ as the foregoing cell to camp on.

Certainly, during actual implementation, the UE may select, from the foregoing first cell and second cell according to any other possible rule, a cell to camp on. This may be specifically determined according to an actual use requirement, and is not limited in the embodiments of the present application.

Optionally, in the embodiments of the present application, after the UE selects, from the foregoing first cell and second cell, a cell to camp on, the UE may determine, according to the cell to camp on, the first information corresponding to the cell to camp on, so that after the UE camps on the cell, the cell no longer satisfies a measurement report trigger condition, and the UE can end the ping-pong handover deadlock.

In the embodiments of the present application, the foregoing cell to camp on may be determined according to a current actual use requirement of the UE. Therefore, after the cell to camp on selected by the UE is determined, the UE may determine, in combination with the cell to camp on, the first information that can enable the UE to camp on the cell to camp on, so that the cell camping capability of the UE can be improved.

Optionally, in the embodiments of the present application, the UE may send the first information or information related to the first information to the network device, to instruct the network device to configure the measurement configuration information corresponding to the first information for the UE. In this way, according to the measurement configuration information that is configured by a network and corresponds to the first information, the UE can assist the network device in optimizing the configuration of the measurement configuration information.

For example, with reference to FIG. 4 above, as shown in FIG. 7, after the foregoing S202, and before the foregoing S201a, the cell camping method provided in the embodiments of the present application may further include the following S206 and S207.

It should be noted that the foregoing FIG. 7 is exemplarily described by using an example in which the UE sends the foregoing third information to the network device before the UE camps on the foregoing first cell or second cell. This does not constitute any limitation to the embodiments of the present application. In practice, the UE may send the foregoing third information to the network device at any possible moment. This may be specifically determined according to an actual use requirement, and is not limited in the embodiments of the present application.

S206: The UE sends third information to the network device.

S207: The network device receives the third information sent by the UE.

The foregoing third information (which may also be referred to as target information) is used for instructing the network device to configure the measurement configuration information corresponding to the third information for the UE. The third information may be the first information or information determined according to the first information. The first information may be information used for the UE to camp on the first cell or the second cell.

In the embodiments of the present application, before the UE camps on the foregoing first cell or second cell, the UE may first send the foregoing third information to the network device, and then when the network device receives the third information, the network device may configure the measurement configuration information corresponding to the third information for the UE. In this way, the UE can assist the network device in optimizing the measurement configuration information configured by the network device for the UE.

Optionally, in the embodiments of the present application, in a case that the foregoing third information is information determined according to the first information, the foregoing third information may be all or a part of at least one parameter or parameter combination that is determined by the UE and does not satisfy the measurement report trigger condition.

Optionally, in the embodiments of the present application, the third information may be carried in an MR and sent to the network device or may be sent to the network device in any other possible manner. This may be specifically determined according to an actual use requirement, and is not limited in the embodiments of the present application.

Optionally, in the embodiments of the present application, in the last ping-ping process before the UE ends the ping-pong handover deadlock, when an MR is reported for a cell (that is, the cell to camp on selected by the UE) used for ending the ping-pong handover deadlock, the UE may add the foregoing third information to the MR, to inform that the network device may configure the measurement configuration information corresponding to the third information for the UE, that is, to inform that the network device performs optimization according to the third information.

Optionally, the foregoing third information may include at least one of a specific offset (for example, a cell-specific offset and/or a frequency-specific offset) calculated/recommended by the UE, a measurement report event recommended by the UE, and a measurement report threshold corresponding to the measurement report event recommended by the UE. This may be specifically determined according to an actual use requirement, and is not limited in the embodiments of the present application.

For example, for the first implementation, the foregoing third information may include a specific offset (for example, a cell-specific offset and/or a frequency-specific offset) calculated by the UE. For the second implementation, the foregoing third information may include a specific offset (for example, a cell-specific offset and/or a frequency-specific offset) recommended by the UE. For the third implementation, the foregoing third information may include a measurement report event recommended by the UE. For the fourth implementation, the foregoing third information may include a measurement report threshold corresponding to the measurement report event recommended by the UE.

In the embodiments of the present application, the first information may be information used for the UE to camp on the first cell or the second cell, and the target information is the first information or information determined according to the first information. Therefore, the network device may configure the measurement configuration information corresponding to the target information for the UE to optimize the measurement configuration information configured by the network device for the UE. In this way, a probability that the UE encounters a ping-pong handover deadlock between two cells can be reduced, so that the performance of configuring measurement information for the UE of the network device can be improved.

Optionally, in the embodiments of the present application, before the UE sends the foregoing third information to the network device, the UE may first use capability information of the UE to inform the network device that the UE supports sending of the third information to the network device, and then after the network device receives the capability information of the UE, the UE may send indication information to the UE to allow the UE to send the third information to the network device. In this case, in a case that the UE needs to send the third information to the network device, the UE may directly send the third information to the network device, to implement smoother interaction between the UE and the network device.

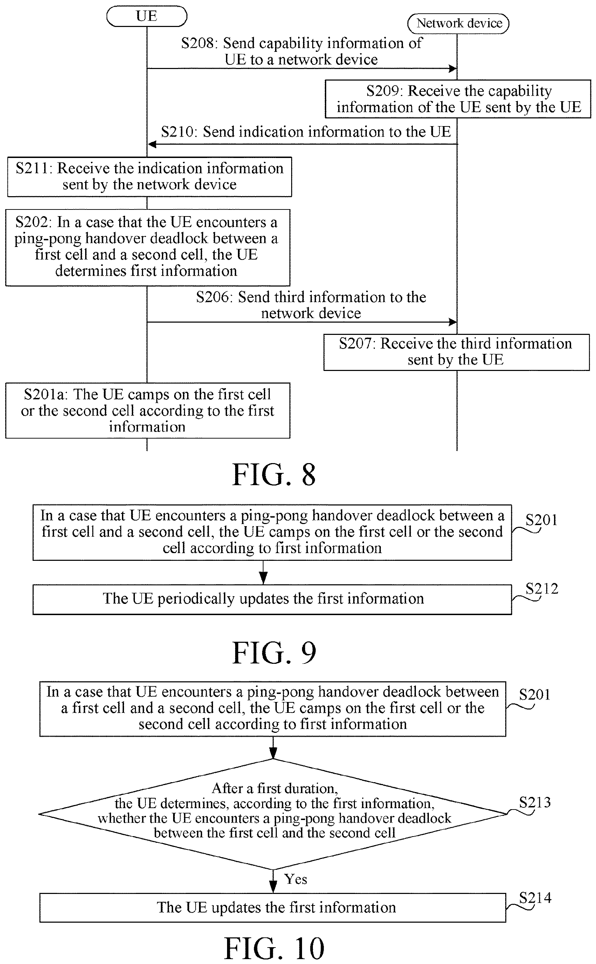

For example, with reference to FIG. 7 above, as shown in FIG. 8, before the foregoing S202, the cell camping method provided in the embodiments of the present application may further include the following S208 to S211.

It should be noted that an execution order between S208 to S211 and S202 may be not limited in the embodiments of the present application. That is, the UE may first perform S208 to S211 and then perform S202, or may first perform S202 and then perform S208 to S211. FIG. 8 is exemplarily described by using an example in which S208 to S211 are performed first and S202 is then performed.

S208: UE sends capability information of the UE to a network device.

S209: The network device receives the capability information of the UE sent by the UE.

The capability information of the UE may be used for indicating that the UE supports sending of the foregoing third information to the network device.

S210: The network device sends indication information to the UE.

S211: The UE receives the indication information sent by the network device.

The foregoing indication information may be used for indicating that the UE is allowed to send the third information (that is, the target information).

In the embodiments of the present application, the UE may send the capability information of the UE to the network device. After the network device receives the capability information of the UE, the network device may send the indication information to the UE, to allow the UE to send the foregoing third information (that is, the target information) to the network device.

Optionally, in the embodiments of the present application, after a connection is established between the UE and the network device, the UE may send the capability information of the UE to the network device, or after the UE determines that the UE encounters a ping-pong handover deadlock between the first cell and the second cell, the UE may send the capability information of the UE to the network device. This may be specifically determined according to an actual use requirement, and is not limited in the embodiments of the present application.

Certainly, during actual implementation, the moment at which the UE sends the capability information of the UE to the network device may be alternatively any other possible moment. This may be specifically determined according to an actual use requirement, and is not limited in the embodiments of the present application.

In the embodiments of the present application, the information sent by the UE to the network device is controlled by the network device, that is, the UE may send, according to information configured by the network device for the UE, information corresponding to the information configured by the network device to the network device. Therefore, if the UE intends to send the foregoing third information (that is, the target information) to the network device, the UE needs to inform the network device that the UE has a capability of sending the third information, so that the network device may indicate that the UE is allowed to send the third information, and the UE can normally send the third information to the network device.

Optionally, with reference to FIG. 3 above, as shown in FIG. 9, after the foregoing S201, the cell camping method provided in the embodiments of the present application may further include the following S212.

S212: The UE periodically updates the first information.

In the embodiments of the present application, after the UE camps on the foregoing first cell or second cell, the UE may periodically update the foregoing first information. That is, the UE may slowly update the first information as time elapses.

Optionally, in the embodiments of the present application, the UE may periodically reduce the first information (which may be specifically a specific offset or the like included in the first information) or may periodically increase the first information. This may be specifically determined according to an actual use requirement, and is not limited in the embodiments of the present application.

Optionally, in the embodiments of the present application, as time elapses, measured values of the first cell and/or the second cell may change. That is, an external environment of the UE changes. Therefore, the UE may periodically update the foregoing first information to make the UE adapt to a corresponding environmental change.

For example, it is assumed that the external environment of the UE changes and as a result a specific offset that the UE needs to increase reduces, the UE gradually reduces the specific offset included in the first information.

Optionally, in the embodiments of the present application, the UE may periodically update the foregoing first information according to a second duration.

Optionally, in the embodiments of the present application, the foregoing second duration may be a value stored in an internal register of the UE by a manufacturer of the UE. This may be specifically determined according to an actual use requirement, and is not limited in the embodiments of the present application.

In the embodiments of the present application, after the UE camps on the first cell or the second cell, as time elapses, the external environment of the UE may change. Therefore, the measurement configuration information corresponding to the foregoing first information may be no longer optimal measurement configuration information for the UE to camp on the cell. In this case, as time elapses, the UE may periodically update the first information, so that the UE can use the optimal measurement configuration information to camp on the cell, thereby reducing resource overheads of the UE.

Optionally, with reference to FIG. 3 above, as shown in FIG. 10, after the foregoing S201, the cell camping method provided in the embodiments of the present application may further include the following S213 and S214.

S213: After a first duration, the UE determines, according to the first information, whether the UE encounters a ping-pong handover deadlock between the first cell and the second cell.

In the embodiments of the present application, after the UE camps on the first cell or the second cell, after the second duration, the UE may determine, based on the foregoing first information, whether the UE encounters a ping-pong handover deadlock between the foregoing first cell and second cell. If the UE encounters a ping-pong handover deadlock between the first cell and the second cell, the UE may perform the following S214, so that the UE ends the ping-pong handover deadlock between the first cell and the second cell. If the UE does not encounter a ping-pong handover deadlock between the first cell and the second cell, the UE may continue monitoring whether the UE encounters a ping-pong handover deadlock between the first cell and the second cell.

S214. The UE updates the first information.

It is determined, based on the updated first information, that a result of the measurement report trigger condition is that the UE is not caused to encounter a ping-pong handover deadlock between the foregoing first cell and the foregoing second cell.

In the embodiments of the present application, if the UE determines, based on the foregoing first information, that the UE encounters a ping-pong handover deadlock between the foregoing first cell and second cell, the UE may update the first information, so that based on the updated first information, the UE no longer encounters a ping-pong handover deadlock between the first cell and the second cell.

It should be noted that in the embodiments of the present application, for the related description of updating the first information, reference may be made to the related description of updating the first information in the foregoing embodiments for details. To avoid repetition, details are not described herein again.

For example, it is assumed that the foregoing first information includes a specific offset (which may be specifically greater than an original specific offset). After a particular movement of the UE, if it is found that in a new external environment the UE encounters a ping-pong handover deadlock again between the same two cells (that is, the first cell and the second cell), the UE may update a corresponding cell-specific offset. Specifically, the cell-specific offset may be increased.

Optionally, the UE may record cell-specific offsets that respectively correspond to the ping-pong cells (that is, the first cell and the second cell). In this way, when the UE updates a cell-specific offset, the UE may respectively perform necessary update on the cell-specific offsets corresponding to the two cells, so that new cell-specific offsets are greater than original cell-specific offsets.

In the embodiments of the present application, after the UE camps on the first cell or the second cell, after a period of time, in a case that the measurement configuration information used by the UE is the measurement configuration information corresponding to the foregoing first information, the UE may encounter a ping-pong handover deadlock between the foregoing first cell and second cell again. In this case, the UE may update the first information, so that the UE camps on the first cell or the second cell, and the UE can end the ping-pong handover deadlock between the first cell and the second cell.

It should be noted that in the embodiments of the present application, the cell camping methods shown in the foregoing accompanying drawings are all exemplarily described by using the accompanying drawings in the embodiments of the present application as examples. During specific implementation, the cell camping methods shown in the foregoing accompanying drawings may be implemented with reference to any other drawing that can be combined in the foregoing embodiments.

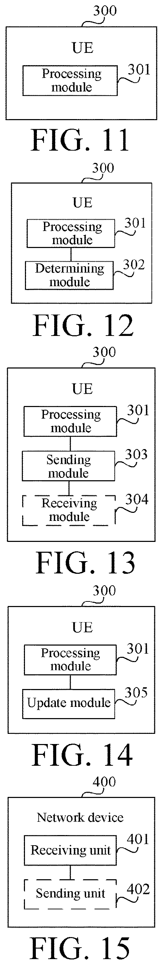

As shown in FIG. 11, the embodiments of the present application provide UE 300. The UE 300 includes a processing module 301. The processing module 301 may be configured to: in a case that the UE encounters a ping-pong handover deadlock between a first cell and a second cell, camp on the first cell or the second cell according to first information, where after the UE camps on the first cell or the second cell, the UE ends the ping-pong handover deadlock, and the first information is determined according to target measurement configuration information.

Optionally, with reference to FIG. 11, as shown in FIG. 12, the UE 300 may further include a determining module 302. The determining module 302 may be configured to: before the processing module 301 camps on the first cell or the second cell according to the first information, determine the first information based on a measurement report trigger condition and a condition that does not cause the UE to encounter a ping-pong handover deadlock between the first cell and the second cell.

Optionally, the first information may include at least one of the following: a cell-specific offset, a frequency-specific offset, a target measurement report event, and a target measurement report threshold.

Optionally, the target measurement configuration information may include at least one of the following: first measurement configuration information corresponding to the first cell and second measurement configuration information corresponding to the second cell.

Optionally, the first information may include at least one of the cell-specific offset and the frequency-specific offset. The first information is determined according to at least one of a specific offset in the first measurement configuration information and a specific offset in the second measurement configuration information.

Optionally, the first information may include at least one of the cell-specific offset and the frequency-specific offset. The first information is determined according to a measurement report event in the first measurement configuration information, a measurement report event in the second measurement configuration information, a specific offset in the first measurement configuration information, and a specific offset in the second measurement configuration information.

Optionally, the first information may include the target measurement report event. The first information is determined according to a measurement report event in the first measurement configuration information and a measurement report event in the second measurement configuration information.

Optionally, the first information includes the target measurement report threshold. The first information is determined according to a measurement report event in the first measurement configuration information, a measurement report event in the second measurement configuration information, a measurement report threshold in the first measurement configuration information, and a measurement report threshold in the second measurement configuration information.

Optionally, the determining module 302 may be further configured to determine, in a case that the first cell and the second cell satisfy a first condition, that the UE encounters a ping-pong handover deadlock between the first cell and the second cell. The first condition includes at least one of the following: a quantity of ping-pong handovers within a first time window reaches a first threshold; and a quantity of ping-pong handovers within a second time window reaches the first threshold and both a signal quality fluctuation value of the first cell and a signal quality fluctuation value of the second cell within the second time window are less than or equal to a second threshold.

Optionally, the determining module 302 may be further configured to: before the processing module 301 camps on the first cell or the second cell according to the first information, select, from the first cell and the second cell according to second information, a cell to camp on. The second information includes at least one of the following: a service requirement of the UE, signal quality of the first cell, and signal quality of the second cell.

Optionally, with reference to FIG. 11, as shown in FIG. 13, the UE 300 may further include a sending module 303. The sending module 303 may be configured to send third information to a network device, the third information being used for instructing the network device to configure measurement configuration information corresponding to the third information for the UE. The third information is the first information or information determined according to the first information.

Optionally, as shown in FIG. 13, the UE 300 may further include a receiving module 304. The sending module 303 may be further configured to send capability information of the UE to the network device. The receive module 304 may be configured to: after the sending module 303 sends the capability information of the UE to the network device, receive indication information sent by the network device. The capability information of the UE is used for indicating that the UE supports sending of the third information to the network device. The indication information is used for indicating that the UE is allowed to send the third information.

Optionally, with reference to FIG. 11, as shown in FIG. 14, the UE 300 may further include an update module 305. The update module 305 may be configured to: after the processing module 301 camps on the first cell or the second cell according to the first information, periodically update the first information.

Optionally, the UE 300 may further include an update module 305. The update module 305 may be configured to: after the processing module 301 camps on the first cell or the second cell according to the first information, if the UE encounters a ping-pong handover deadlock between the first cell and the second cell based on the first information after a first duration, update the first information. It is determined, based on the updated first information, that a result of the measurement report trigger condition is that the UE is not caused to encounter a ping-pong handover deadlock between the first cell and the second cell.

The UE provided in the embodiments of the present application can implement various processes performed by the UE in the embodiments of the foregoing cell camping method, and can achieve the same technical effects. To avoid repetition, details are not described herein again.

The embodiments of the present application provide UE. By means of the solution, in a case that the UE encounters a ping-pong handover deadlock between a first cell and a second cell, the UE may camp on the first cell or the second cell according to first information. Therefore, the UE may be stopped from being handed over back and forth between the first cell and the second cell. That is, the UE may end the ping-pong handover deadlock. In this way, after the UE camps on the first cell or the second cell, the UE may be released from a connected state, that is, the UE may be switched from the connected state to an idle state, so that the power consumption of the UE can be reduced.

As shown in FIG. 15, the embodiments of the present application provide a network device 400. The network device 400 includes a receiving unit 401. The receiving unit 401 may be configured to receive target information sent by the UE. The target information is used for instructing the network device to configure measurement configuration information corresponding to the target information for the UE. The target information is first information or information determined according to the first information, and the first information is information for the UE to camp on a first cell or a second cell.

Optionally, as shown in FIG. 15, the network device 400 may further include a sending unit 402. The receiving unit 401 may be further configured to: before receiving the target information sent by the UE, receive capability information of the UE sent by the UE. The sending unit 402 may be further configured to: before the receiving unit 401 receives the capability information of the UE sent by the UE, send indication information to the UE. The capability information of the UE is used for indicating that the UE supports sending of the target information to the network device. The indication information is used for indicating that the UE is allowed to send the target information.

The network device provided in the embodiments of the present application can implement various processes performed by the network device in the embodiments of the foregoing cell camping method, and can achieve the same technical effects. To avoid repetition, details are not described herein again.

The embodiments of the present application provide a network device. The first information may be information used for the UE to camp on the first cell or the second cell, and the target information is the first information or information determined according to the first information. Therefore, the network device may configure the measurement configuration information corresponding to the target information for the UE to optimize the measurement configuration information configured by the network device for the UE. In this way, a probability that the UE encounters a ping-pong handover deadlock between two cells can be reduced, so that the performance of configuring measurement information for the UE of the network device can be improved.

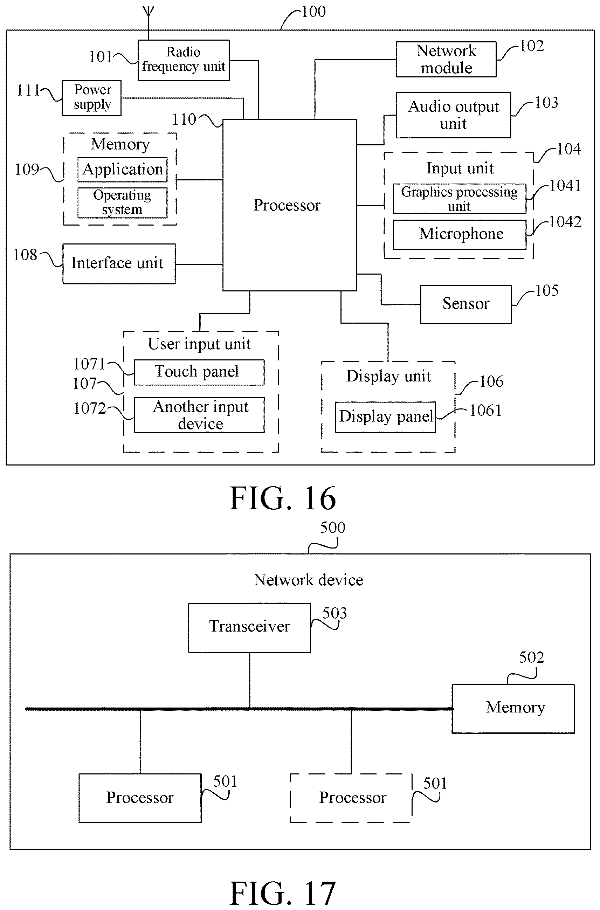

FIG. 16 is a schematic hardware diagram of UE that implements the embodiments of the present application. As shown in FIG. 16, the UE 100 includes, but is not limited to, components such as a radio frequency unit 101, a network module 102, an audio output unit 103, an input unit 104, a sensor 105, a display unit 106, a user input unit 107, an interface unit 108, a memory 109, a processor 110, and a power supply 111. A person skilled in the art may understand that the structure of the UE shown in FIG. 16 does not constitute any limitation on the UE, and instead, the UE may include more or fewer components than those shown in the figure, or some components may be combined, or a different component deployment may be used. In the embodiments of the present application, the UE includes, but is not limited to, a mobile phone, a tablet computer, a notebook computer, a palmtop computer, an in-vehicle terminal, a wearable device, a pedometer, and the like.

The processor 110 may be configured to: in a case that the UE encounters a ping-pong handover deadlock between a first cell and a second cell, camp on the first cell or the second cell according to first information, where after the UE camps on the first cell or the second cell, the UE ends the ping-pong handover deadlock, and the first information is determined according to target measurement configuration information.

It may be understood that in the embodiments of the present application, the processing module 301 in the schematic structural diagram (for example, FIG. 11) of the foregoing UE may be implemented by using the foregoing processor 110.

The embodiments of the present application provide UE. By means of the solution, in a case that the UE encounters a ping-pong handover deadlock between a first cell and a second cell, the UE may camp on the first cell or the second cell according to first information. Therefore, the UE may be stopped from being handed over back and forth between the first cell and the second cell. That is, the UE may end the ping-pong handover deadlock. In this way, after the UE camps on the first cell or the second cell, the UE may be released from a connected state, that is, the UE may be switched from the connected state to an idle state, so that the power consumption of the UE can be reduced.

It should be understood that in the embodiments of the present application, the radio frequency unit 101 may be configured to send and receive a signal during an information receiving and sending process or a call process. Specifically, the radio frequency unit receives downlink data from a base station, and then delivers the downlink data to the processor 110 for processing; and in addition, sends uplink data to the base station. The radio frequency unit 101 includes, but is not limited to, an antenna, at least one amplifier, a transceiver, a coupler, a low noise amplifier, a duplexer, and the like. In addition, the radio frequency unit 101 may further communicate with another device through a wireless communication system.

The UE 100 provides wireless broadband Internet access for a user by using the transmission module 102, for example, helps the user to send and receive an email, browse a webpage, and access stream media, and the like.

The audio output unit 103 may convert audio data received by the radio frequency unit 101 or the network module 102 or stored in the memory 109 into an audio signal and output the audio signal as sound. Moreover, the audio output unit 103 may provide an audio output (such as call signal receiving sound or message receiving sound) related to a specific function executed by the UE 100. The audio output unit 103 includes a loudspeaker, a buzzer, a receiver, and the like.

The input unit 104 is configured to receive an audio signal or a video signal. The input unit 104 may include a graphics processing unit (graphics processing unit, GPU) 1041 and a microphone 1042. The GPU 1041 processes image data of a static picture or a video that is obtained by an image acquisition apparatus (for example, a camera) in a video acquisition mode or an image acquisition mode. An image frame that has been processed may be displayed on a display unit 106. The image frame that has been processed by the GPU 1041 may be stored in the memory 109 (or another storage medium) or sent by using the radio frequency unit 101 or the network module 102. The microphone 1042 may receive a sound, and can process the sound into audio data. The processed audio data may be converted, in a phone talk mode, into a format that may be sent to a mobile communication base station via the radio frequency unit 101 for output.

The UE 100 further includes at least one sensor 105 such as an optical sensor, a motion sensor, and other sensors. Specifically, the optical sensor includes an ambient light sensor and a proximity sensor, where the ambient light sensor may adjust luminance of the display panel 1061 according to the luminance of the ambient light, and the proximity sensor may switch off the display panel 1061 and/or backlight when the UE 100 is moved to the ear. As one type of motion sensor, an acceleration sensor may detect magnitude of accelerations in various directions (generally on three axes), may detect magnitude and a direction of the gravity when static, and may be configured to recognize the attitude of the UE 100 (for example, switching between landscape orientation and portrait orientation, a related game, and magnetometer attitude calibration), a function related to vibration recognition (such as a pedometer and a knock), and the like. The sensor 105 may further include a fingerprint sensor, a pressure sensor, an iris sensor, a molecular sensor, a gyroscope, a barometer, a hygrometer, a thermometer, and an infrared sensor, and the like. Details are not described herein again.

The display unit 106 is configured to display information input by the user or information provided for the user. The display unit 106 may include a display panel 1061. The display panel 1061 may be configured in the form of a liquid crystal display (liquid crystal display, LCD), an organic light-emitting diode (organic light-emitting diode, OLED), or the like.

The user input unit 107 may be configured to receive input digit or character information, and generate key signal input related to the user setting and function control of the UE 100. Specifically, the user input unit 107 includes a touch panel 1071 and another input device 1072. The touch panel 1071, also referred to as a touchscreen, may collect a touch operation of a user on or near the touch panel (such as an operation of a user on or near the touch panel 1071 by using any suitable object or attachment, such as a finger or a touch pen). the touch panel 1071 may include two parts: a touch detection apparatus and a touch controller. The touch detection apparatus detects a touch position of the user, detects a signal generated by the touch operation, and transfers the signal to the touch controller. The touch controller receives the touch information from the touch detection apparatus, converts the touch information into touch point coordinates, and transmits the touch point coordinates to the processor 110. Moreover, the touch controller receives and executes a command sent from the processor 110. In addition, the touch panel 1071 may be implemented by using various types, such as a resistive type, a capacitive type, an infrared type, and a surface acoustic wave type. In addition to the touch panel 1071, the user input unit 107 may further include the another input device 1072. Specifically, the another input device 1072 may include, but not limited to, a physical keyboard, a functional key (such as a volume control key or a switch key), a track ball, a mouse, and a joystick. Details are not described herein again.

Further, the touch panel 1071 may cover the display panel 1061. After detecting a touch operation on or near the touch panel 1071, the touch panel 1071 transfers the touch operation to the processor 110, so as to determine a type of the touch event. Then, the processor 110 provides corresponding visual output on the display panel 1061 according to the type of the touch event. Although, in FIG. 16, the touch panel 1071 and the display panel 1061 are used as two separate parts to implement input and output functions of the UE 100, in some embodiments, the touch panel 1071 and the display panel 1061 may be integrated to implement the input and output functions of the UE 100, which are not limited herein.

The interface unit 108 is an interface for connecting an external apparatus to the UE 100. For example, the external apparatus may include a wired or wireless headset port, an external power supply (or a battery charger) port, a wired or wireless data port, a storage card port, a port used to connect an apparatus having an identification module, an audio input/output (I/O) port, a video I/O port, an earphone port, and the like. The interface unit 108 may be configured to receive an input (such as data information or electric power) from an external apparatus and transmit the received input to one or more elements in the UE 100 or may be configured to transmit data between the UE 100 and an external apparatus.

The memory 109 may be configured to store a software program and various data. The memory 109 may mainly include a program storage region and a data storage region. The program storage region may store an operating system, an application program (such as a sound play function or an image play function) that is required by at least one function, and the like. The data storage region may store data (such as audio data or a phonebook) that is created according to use of the mobile phone, and the like. In addition, the memory 109 may include a high-speed random access memory, and may further include a nonvolatile memory, such as at least one magnetic disk storage device, a flash memory, or another volatile solid-state storage device.

The processor 110 is the control center of the UE 100, and is connected to various parts of the UE 100 by using various interfaces and lines. By running or executing the software program and/or module stored in the memory 109, and invoking data stored in the memory 109, the processor 110 performs various functions and data processing of the UE 100, thereby performing overall monitoring on the UE 100. The processor 110 may include one or more processing units. Optionally, the processor 110 may integrate an application processor and a modem processor. The application processor mainly processes an operating system, a user interface, an application, and the like. The modem processor mainly processes wireless communication. It may be understood that the modulation and demodulation processor may not be integrated into the processor 110.

The UE 100 further includes a power supply 111 (such as a battery) for supplying power to the components. Optionally, the power supply 111 may be logically connected to the processor 110 by using a power management system, thereby implementing functions such as charging, discharging, and power consumption management by using the power management system.

In addition, the UE 100 includes some functional modules that are not shown. Details are not described herein again.

It may be understood that in the embodiments of the present application, the UE 100 may be the UE 02 in the communications system shown in FIG. 1 in the foregoing embodiments.

Optionally, the embodiments of the present application further provide UE, including the processor 110 and the memory 109 shown in FIG. 16 and a computer program stored in the memory 109 and capable of being run on the processor 110, where the computer program implements various processes of the embodiments of the cell camping method when being executed by the processor 110, and can achieve the same technical effects. To avoid repetition, details are not described herein again.

FIG. 17 is a schematic hardware diagram of a network device according to an embodiment of the present application. As shown in FIG. 17, the network device 500 may include one or more processors 501, a memory 502, and a transceiver 503.

The transceiver 503 may be configured to receive target information sent by UE. The target information is used for instructing the network device to configure measurement configuration information corresponding to the target information for the UE. The target information is first information or information determined according to the first information, and the first information is information for the UE to camp on a first cell or a second cell.

It should be noted that one processor 501 in the two processors 501 in the foregoing FIG. 17 is represented by a dashed line, to indicate that there may be one or more processors 501 in the network device 500. FIG. 17 is exemplarily described by using an example in which the network device 500 includes two processors 501.

It may be understood that in the embodiments of the present application, the receiving unit in the schematic structural diagram (for example, FIG. 15) of the foregoing network device may be implemented by using the foregoing transceiver 503.

The embodiments of the present application provide a network device. The first information may be information used for the UE to camp on the first cell or the second cell, and the target information is the first information or information determined according to the first information. Therefore, the network device may configure the measurement configuration information corresponding to the target information for the UE to optimize the measurement configuration information configured by the network device for the UE. In this way, a probability that the UE encounters a ping-pong handover deadlock between two cells can be reduced, so that the performance of configuring measurement information for the UE of the network device can be improved.

In the embodiments of the present application, the one or more processors 501, the memory 502, and the communication interface 503 may be connected to each other. The one or more processors 501 may be base band units (base band unit, BBU), which may also be referred to as building base band units. The transceiver 503 may be a remote radio unit (remote radio unit, RRU), which may also be referred to as a remote transmission unit. In addition, the network device 500 may further include some functional modules that are not shown. Details are not described herein again.

It may be understood that in the embodiments of the present application, the network device 500 may be the network device 01 in the communication system shown in FIG. 1 in the foregoing embodiments.

Optionally, the embodiments of the present application further provide a network device, including the processor 501 and the memory 502 shown in FIG. 17 and a computer program stored in the memory 502 and capable of being run on the processor 501, where the computer program implements various processes of the method embodiments when being executed by the processor 501, and can achieve the same technical effects. To avoid repetition, details are not described herein again.

The embodiments of the present application further provide a computer-readable storage medium, storing a computer program, where the computer program, when executed by the processor 110 shown in FIG. 16 or the processor 501 shown in FIG. 17, implements various processes performed by the UE and the network device in the embodiments of the foregoing cell camping method, and can achieve the same technical effects. To avoid repetition, details are not described herein again. The computer-readable storage medium may include, for example, a read-only memory (read-only memory, ROM), a random access memory (random access memory, RAM), a magnetic disk, an optical disc, or the like.

It should be noted that the terms "include", "comprise", or any other variation thereof in this specification is intended to cover a non-exclusive inclusion, which specifies the presence of stated processes, methods, objects, or apparatuses, but do not preclude the presence or addition of one or more other processes, methods, objects, or apparatuses. Without more limitations, elements defined by the sentence "including one" does not exclude that there are still other same elements in the processes, methods, objects, or apparatuses.

Through the foregoing description on the implementations, a person skilled in the art can clearly learn that the foregoing embodiment methods may be implemented by using software in combination with a necessary universal hardware platform. Certainly, the embodiment methods may also be implemented by using hardware, but the former is a better implementation in many cases. Based on such an understanding, the technical solutions of this application essentially or the part contributing to the related art may be implemented in a form of a software product. The computer software product is stored in a storage medium (such as a ROM/RAM, a magnetic disk, or an optical disc) and includes several instructions for instructing a terminal (which may be a mobile phone, a computer, a network device, or the like) to perform the methods described in the embodiments of this application.

The embodiments of the present application have been described above with reference to the accompanying drawings. The present application is not limited to the specific embodiments described above, and the specific embodiments described above are merely exemplary and not limitative. Those of ordinary skill in the art may make various variations under the teaching of the present application without departing from the spirit of the present disclosure and the protection scope of the claims, and such variations shall all fall within the protection scope of the present application.

## Claims

1. A cell camping method, applied to user equipment UE, and comprising:
in a case that the UE encounters a ping-pong handover deadlock between a first cell and a second cell, camping on the first cell or the second cell according to first information,
wherein after the UE camps on the first cell or the second cell, the UE ends the ping-pong handover deadlock, and the first information is determined according to target measurement configuration information.

2. The method according to claim 1, wherein before the camping on the first cell or the second cell according to first information, the method comprises:
determining, based on a measurement report trigger condition, the first information that does not cause the UE to encounter a ping-pong handover deadlock between the first cell and the second cell.

3. The method according to claim 1 or 2, wherein the first information comprises at least one of the following: a cell-specific offset, a frequency-specific offset, a target measurement report event, and a target measurement report threshold.

4. The method according to claim 3, wherein the target measurement configuration information comprises at least one of the following: first measurement configuration information corresponding to the first cell and second measurement configuration information corresponding to the second cell.

5. The method according to claim 4, wherein the first information comprises at least one of the cell-specific offset and the frequency-specific offset,
wherein the first information is determined according to at least one of a specific offset in the first measurement configuration information and a specific offset in the second measurement configuration information.

6. The method according to claim 4, wherein the first information comprises at least one of the cell-specific offset and the frequency-specific offset,
wherein the first information is determined according to a measurement report event in the first measurement configuration information, a measurement report event in the second measurement configuration information, a specific offset in the first measurement configuration information, and a specific offset in the second measurement configuration information.

7. The method according to claim 4, wherein the first information comprises the target measurement report event,
wherein the first information is determined according to a measurement report event in the first measurement configuration information and a measurement report event in the second measurement configuration information.

8. The method according to claim 4, wherein the first information comprises the target measurement report threshold,
wherein the first information is determined according to a measurement report event in the first measurement configuration information, a measurement report event in the second measurement configuration information, a measurement report threshold in the first measurement configuration information, and a measurement report threshold in the second measurement configuration information.

9. The method according to claim 1 or 2, comprising:
determining, in a case that the first cell and the second cell satisfy a first condition, that the UE encounters a ping-pong handover deadlock between the first cell and the second cell,
wherein the first condition comprises at least one of the following: a quantity of ping-pong handovers within a first time window reaches a first threshold; and a quantity of ping-pong handovers within a second time window reaches the first threshold and both a signal quality fluctuation value of the first cell and a signal quality fluctuation value of the second cell within the second time window are less than or equal to a second threshold.

10. The method according to claim 1 or 2, wherein before the camping on the first cell or the second cell according to first information, the method comprises:
selecting, from the first cell and the second cell according to second information, a cell to camp on,
wherein the second information comprises at least one of the following: a service requirement of the UE, signal quality of the first cell, and signal quality of the second cell.

11. The method according to claim 1 or 2, comprising:
sending third information to a network device, the third information being used for instructing the network device to configure measurement configuration information corresponding to the third information for the UE,
wherein the third information is the first information or information determined according to the first information.

12. The method according to claim 11, comprising:
sending capability information of the UE to the network device, the capability information of the UE being used for indicating that the UE supports sending of the third information to the network device; and
receiving indication information sent by the network device, the indication information being used for indicating that the UE is allowed to send the third information.

13. The method according to claim 1 or 2, wherein after the camping on the first cell or the second cell according to first information, the method comprises:
periodically updating the first information.

14. The method according to claim 1 or 2, wherein after the camping on the first cell or the second cell according to first information, the method comprises:
if the UE encounters a ping-pong handover deadlock between the first cell and the second cell based on the first information after a first duration, updating the first information,
wherein it is determined, based on the updated first information, that a result of the measurement report trigger condition is that the UE is not caused to encounter a ping-pong handover deadlock between the first cell and the second cell.

15. A cell camping method, applied to a network device, and comprising:
receiving target information sent by user equipment UE, the target information being used for instructing the network device to configure measurement configuration information corresponding to the target information for the UE,
wherein the target information is first information or information determined according to the first information, and the first information is information for the UE to camp on a first cell or a second cell.

16. The method according to claim 15, wherein before the receiving target information sent by UE, the method comprises:
receiving capability information of the UE sent by the UE, the capability information of the UE being used for indicating that the UE supports sending of the target information to the network device; and
sending indication information to the UE, the indication information being used for indicating that the UE is allowed to send the target information.

17. User equipment UE, comprising a processing module,
the processing module being configured to: in a case that the UE encounters a ping-pong handover deadlock between a first cell and a second cell, camp on the first cell or the second cell according to first information,
wherein after the UE camps on the first cell or the second cell, the UE ends the ping-pong handover deadlock, and the first information is determined according to target measurement configuration information.

18. The UE according to claim 17, wherein the UE comprises a determining module,
the determining module being configured to: before the processing module camps on the first cell or the second cell according to the first information, determine, based on a measurement report trigger condition, the first information that does not cause the UE to encounter a ping-pong handover deadlock between the first cell and the second cell.

19. The UE according to claim 17 or 18, wherein the first information comprises at least one of the following: a cell-specific offset, a frequency-specific offset, a target measurement report event, and a target measurement report threshold.

20. The UE according to claim 19, wherein the target measurement configuration information comprises at least one of the following: first measurement configuration information corresponding to the first cell and second measurement configuration information corresponding to the second cell.

21. The UE according to claim 20, wherein the first information comprises at least one of the cell-specific offset and the frequency-specific offset,
wherein the first information is determined according to at least one of a specific offset in the first measurement configuration information and a specific offset in the second measurement configuration information.

22. The UE according to claim 20, wherein the first information comprises at least one of the cell-specific offset and the frequency-specific offset,
wherein the first information is determined according to a measurement report event in the first measurement configuration information, a measurement report event in the second measurement configuration information, a specific offset in the first measurement configuration information, and a specific offset in the second measurement configuration information.

23. The UE according to claim 20, wherein the first information comprises the target measurement report event,
wherein the first information is determined according to a measurement report event in the first measurement configuration information and a measurement report event in the second measurement configuration information.

24. The UE according to claim 20, wherein the first information comprises the target measurement report threshold,
wherein the first information is determined according to a measurement report event in the first measurement configuration information, a measurement report event in the second measurement configuration information, a measurement report threshold in the first measurement configuration information, and a measurement report threshold in the second measurement configuration information.

25. The UE according to claim 18, wherein the determining module is configured to determine, in a case that the first cell and the second cell satisfy a first condition, that the UE encounters a ping-pong handover deadlock between the first cell and the second cell,
wherein the first condition comprises at least one of the following: a quantity of ping-pong handovers within a first time window reaches a first threshold; and a quantity of ping-pong handovers within a second time window reaches the first threshold and both a signal quality fluctuation value of the first cell and a signal quality fluctuation value of the second cell within the second time window are less than or equal to a second threshold.

26. The UE according to claim 18, wherein the determining module is configured to: before the processing module camps on the first cell or the second cell according to the first information, select, from the first cell and the second cell according to second information, a cell to camp on,
wherein the second information comprises at least one of the following: a service requirement of the UE, signal quality of the first cell, and signal quality of the second cell.

27. The UE according to claim 17 or 18, comprising a sending module,
the sending module being configured to send third information to a network device, the third information being used for instructing the network device to configure measurement configuration information corresponding to the third information for the UE,
wherein the third information is the first information or information determined according to the first information.

28. The UE according to claim 27, comprising a receiving module,
the sending module being configured to send capability information of the UE to the network device, the capability information being used for indicating that the UE supports sending of the third information to the network device;
the receiving module being configured to: after the sending module sends the capability information of the UE to the network device, receive indication information sent by the network device, the indication information being used for indicating that the UE is allowed to send the third information.

29. The UE according to claim 17 or 18, comprising an update module,
the update module being configured to: after the processing module camps on the first cell or the second cell according to the first information, periodically update the first information.

30. The UE according to claim 17 or 18, comprising an update module,
the update module being configured to: after the processing module camps on the first cell or the second cell according to the first information, if the UE encounters a ping-pong handover deadlock between the first cell and the second cell based on the first information after a first duration, update the first information,
wherein it is determined, based on the updated first information, that a result of the measurement report trigger condition is that the UE is not caused to encounter a ping-pong handover deadlock between the first cell and the second cell.

31. A network device, comprising a receiving unit,
the receiving unit being configured to receive target information sent by user equipment UE, the target information being used for instructing the network device to configure measurement configuration information corresponding to the target information for the UE,
wherein the target information is first information or information determined according to the first information, and the first information is information for the UE to camp on a first cell or a second cell.

32. The network device according to claim 31, comprising a sending unit,
the receiving unit being configured to: before receiving the target information sent by the UE, receive capability information sent by the UE, the capability information being used for indicating that the UE supports sending of the target information to the network device; and
the sending unit being configured to: after the receiving unit receives the capability information sent by the UE, send indication information to the UE, the indication information being used for indicating that the UE is allowed to send the target information.

33. User equipment UE, comprising a processor, a memory, and a computer program stored in the memory and capable of being run on the processor, wherein the computer program is executed by the processor to implement the steps of the foregoing cell camping method according to any one of claims 1 to 14.

34. A network device, comprising a processor, a memory, and a computer program stored in the memory and capable of being run on the processor, wherein the computer program is executed by the processor to implement the steps of the foregoing cell camping method according to claim 15 or 16.

35. A communications system, comprising the user equipment UE according to any one of claims 17 to 30 and the network device according to claim 31 or 32; or
comprising the UE according to claim 33 and the network device according to claim 34.

36. A computer-readable storage medium, storing a computer program, the computer program being executed by a processor to implement the steps of the cell camping method according to any one of claims 1 to 16.
